# EUROPEAN PATENT APPLICATION

(11) **EP 4 198 075 A1**
(43) Date of publication of application: **21.06.2023**
(21) Application number: 21214571.8
(22) Date of filing: 14.12.2021
(51) Int. Cl.: C08J 11/24, C08G 63/78, B29B 9/06, B01J 2/06, C08G 63/88

(54) **PROCESS FOR PRODUCING RECYCLED PET RESIN AND METHOD FOR PRODUCING MOULDED ARTICLES**

(71) Applicant: Köksan Pet ve Plastik Ambalaj Sanayi ve Ticaret Anonim Sirketi, 27600 Sehitkamil/Gaziantep (TR)
(72) Inventor: Kökoglu, Muhammet Murat, 27600 Gaziantep (TR)
(74) Representative: Mutlu, Aydin

(57) **Abstract**

The present invention provides a process for producing recycled PET resin or moulded articles thereof from PET wastes comprising basically depolymerization of PET flakes, polycondensation of the monomers and oligomers, treating the melt with cooling water in a cooling medium, whereby pH of the cooling medium is adjusted to a value ranging from 6.5 to 7.5, and crystallization of the PET composition to give recycled PET resin (rPET). The resin may optionally be pelletized for storage. The resin or pellets obtained herein can subsequently be used for the production of PET bottles, containers and fibres.

## Description

### Technical Field of the Invention

The present invention relates to a process for producing recycled resin from PET wastes which can improve service life of the process equipment, and at the same time, prevent undesired colouration and colour shades in moulded articles. The present invention pertains also to a method for producing moulded articles such as fibres, bottles and containers by using a resin composition substantially constituted by said recycled resin.

### Background of the Invention

The present invention provides a cost-effective process for recycling of polyester articles having polyethylene terephthalate (PET) content which results in a high-quality resin suitable for producing moulded articles such as bottles, containers and fibres.

In recent years, recycling of polyester containers such as PET bottles has gained importance and official authorities currently foster collection and recycling for saving resources and protecting environment. There are various techniques for recycling polyesters used in the relevant art. However, the quality requirements for most recycled PET applications are highly demanding. The acceptable level of particulate contaminants for many end-products is less than 100 parts per million (or 0.0001% by weight). Colouration is also an important concern which affect transparency of final product Besides, it is highly desirable to increase percentage of recycled PET resin (rPET) in the overall composition of the moulded articles without causing colouration and colour shades.

US7192545B2 discloses a process for crystallization of a polyester polymer comprising introducing a molten polyester polymer, made in a melt phase polycondensation process, into a liquid medium at a liquid medium temperature greater than Tg of the polyester polymer.

WO 2020/149798 A1 discloses a PET recycling process by using a glycolysis method comprising mainly the steps of pre-treatment of the PET flakes, depolymerization, treatment with ethylene glycol and obtaining monomers, filtration of the monomers, and obtaining the recycled resin (rPET) with the monomers obtained in the process. This document includes the certain steps of the recycling process according to the present invention, and therefore incorporated herein as a reference in its entirety. The process is suitable for producing high quality rPET resin for mixing with non-recycled resin and obtaining eventually the final moulded products. There is, however, a long-standing demand for producing moulded articles by using a resin composition constituted by higher percentage (i.e. 100% of rPET).

The present processes available in the art do not allow production of moulded articles by using 100% of rPET without sacrificing quality of the final product. In attempts to overcome these difficulties, it is also noted that process equipment is heavily deteriorated and energy consumption is increased. The present invention eliminates and alleviates the foregoing drawbacks by a process according claim 1.

### Brief Description of the Figures

The figures, whose brief explanations are herewith provided, are solely intended for providing a better understanding of the present invention and are as such not intended to define the scope of protection or the context in which said scope is to be interpreted in the absence of the description.
Figure 1 is a general scheme of an exemplary pre-treatment procedure involved in the process of the present invention.
Figure 2 shows flowchart of the depolymerization and esterification procedure involved in the process of the present invention.
Figure 3 is a general scheme of the polycondensation and pelletisation procedures involved in the process of the present invention.
Figure 4 is a general scheme of the crystallisation and finishing procedures involved in the process of the present invention.

### Brief Description of the Invention

The present invention relates to a process for producing recycled PET resin or moulded articles thereof from PET wastes comprising the steps of:
a. providing PET flakes and/or fibres from the PET wastes,
b. depolymerization of the PET flakes and/or fibres by treatment with ethylene glycol and a catalyst, and obtaining monomers and oligomers,
c. polycondensation of the monomers and oligomers obtained in step (b), and obtaining a melt,
d. treating said melt with water as a cooling medium, whereby pH of the cooling medium is adjusted to a value ranging from 6.5 to 7.5, and
e. obtaining the recycled PET resin.

The cooling medium may actually be a system in which PET melt is immersed into the cooling water like a bath. In preferred embodiments, the recycled PET resin (rPET) is obtained in the form of pellets. Pelletisation is achieved through the cooling medium which is actually designed as an Under Water Pelletisation System (UWPS). Crystallization starts in the cooling medium at this stage. The temperature of the cooling water mentioned above is below glass transition temperature (T_{g}) of the PET resin. Said temperature is preferably below 70°C, more preferably between 20°C and 65°C. Hereby, the cooling medium can also be equipped with a gas injection system as disclosed in US 2007/0132134 A1 in which air or inert gas is injected through the pelletisation system.

The catalyst used in depolymerization of the PET flakes can be zinc acetate. It is also preferably to provide a pre-treatment procedure for washing, drying and sorting of the PET flakes or fibres before the depolymerization.

The viscosity value of the monomers and oligomers in the depolymerization step (b) can be adjusted to a value ranging from 0,78 dl/g to 0,05 dl/g. The monomers and oligomers in this step can be subjected to filtration at a value less than 5 µm.

The polycondensation step (c) is preferably carried out in a polycondensation reactor process. The melt in this phase can be filtered with a filtration system having mesh size between 20 µm and 60 µm, more preferably of about 40 µm. This stage may also involve usage of a pelletizing system including a granulator with a die plate and a rotating blade. The process may further comprise continuation of crystallization after pelletisation by treatment of PET resin with air.

In a further aspect, the process of the present invention further comprises moulding of the recycled PET resin or pellets to produce a moulded article, wherein 100% of PET composition of the moulded article is sourced by the recycled PET resin of PET pellets. Said moulded article is a PET bottle or container, or PET fibres. In the case of PET bottles or containers, the temperature of the cooling water is preferably between 55°C and 65°C. In the case of PET fibres, on the other hand, the temperature of the cooling water is preferably between 20°C and 30°C.

### Detailed Description of the Invention

Polyethylene terephthalate (PET) is a well-known thermoplastic polymer of the polyester family, and is mostly used for synthetic fibres in textile industry as well as bottle production. PET can be produced by various processes such as dimethyl terephthalate process or terephthalic acid process. Dimethyl terephthalate process involves the reaction of dimethyl terephthalate with ethylene glycol in the presence of a basic catalyst Terephthalic acid process, on the other hand, involves esterification of terephthalic acid with ethylene glycol.

PET is subject to various degradations which can result in discolouration, colour shades or undesired colouration as well as reduced molecular weight and formation of acetaldehyde. It is also noted that the process equipment used in the re-polymerization step, such as the die plate and rotating blade of the granulator, are subjected to a quick erosion and corrosion which are expensive parts of the system. Moreover, the systems used in conventional processes require higher energy consumption for heating the cooling water, drying the resin or removing acetaldehyde from the resin.

Objects of the present invention lie on the elimination of the foregoing drawbacks and providing a cost effective and efficient process for producing recycled PET resin as well as moulded articles thereof such as PET fibres, bottles and containers.

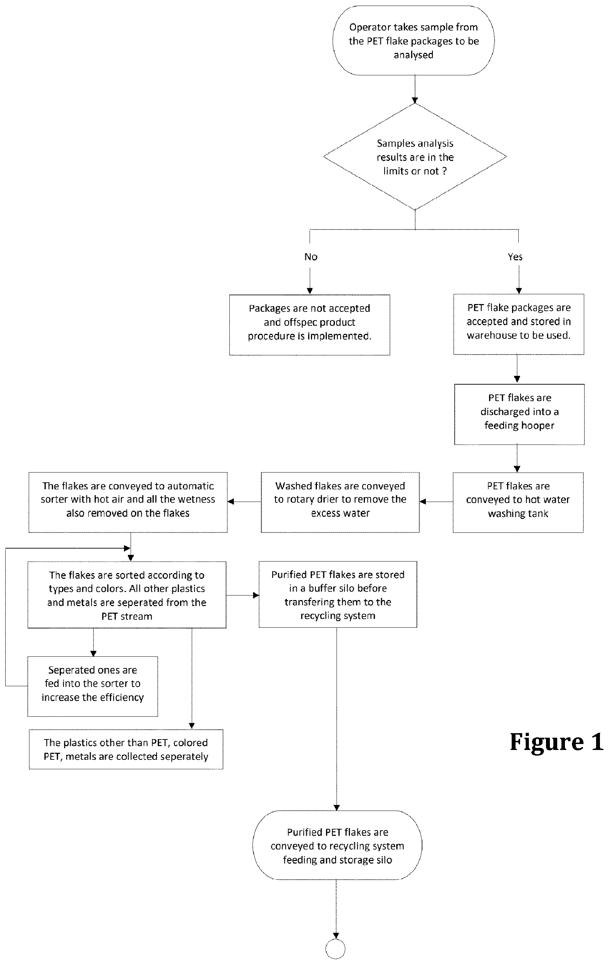

Referring now to Fig. 1, which shows a pre-treatment procedure of the process according to the present invention, PET flakes, fractures or fibres can initially be treated with washing, drying and sorting steps in order to remove dirtiness and impurities such as metals and undesired polymers (i.e. PP, PVC, PE etc.). The PET flakes as mentioned hereinabove can be prepared by shredding of PET articles such as the bottles and containers collected after their usage. Since the quality requirements for most recycled PET applications are highly demanding, sorting of the PET flakes based on colour is particularly preferable. Alternatively, the colour sorting may be carried out before the shredding step based on the PET articles used as the raw material.

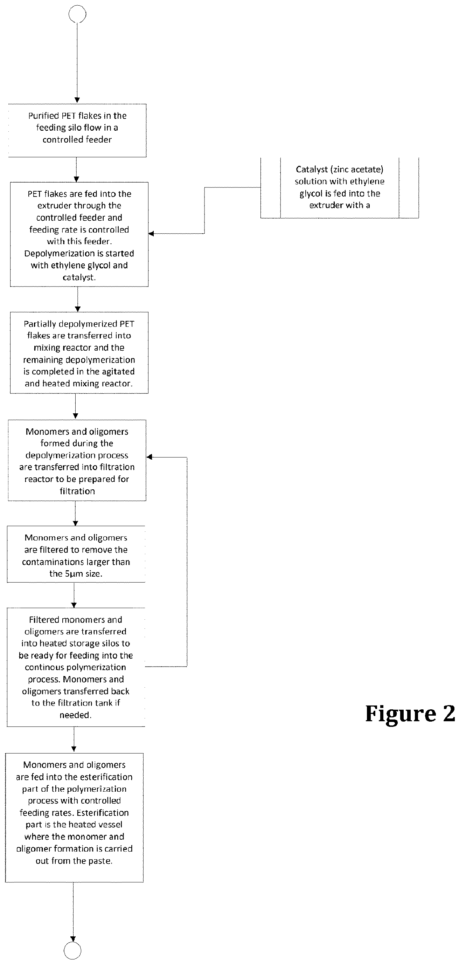

In a further procedure as shown in Fig. 2, PET flakes are subjected to a depolymerization reaction, preferably started in an extruder and completed in a mixing reactor. Depolymerization is conducted by feeding ethylene glycol and a catalyst to the system which result in monomers and oligomers. Said catalyst is preferably zinc acetate. Ethylene glycol and the catalyst are preferably introduced to the extruder and then to the mixing reactor for completing the depolymerization reaction as quick as possible. Viscosity of the melt is adjusted to a value ranging from 0,78 dl/g to 0,05 dl/g, more preferably to a value ranging from 0,25 dl/g to 0,05 dl/g, and most preferably to a value ranging from 0,12 dl/g to 0,05 dl/g.

In preferred embodiments, microfiltration is used for a complete depolymerization process to the monomer level. This step can be accomplished by treating the melt in lowered viscosity with ethylene glycol in controlled ratios in the mixing reactor and then pumping the monomers into a filtration reactor wherein the monomers are subjected to a filtration, preferably to a value less than 5 µm. Process continues by mixing the monomer with a filtration agent in the microfiltration unit. Microfiltration is quite an important step in providing the monomer required for PET resin production, which can be in contact with food. It also helps to improve colour characteristics of the resin such that undesired colourations or colour shades are alleviated. Monomers can be filtered in a microfiltration unit which can be heated by a heat transfer oil. All impurities greater than the predetermined size are filtered and removed from the monomers.

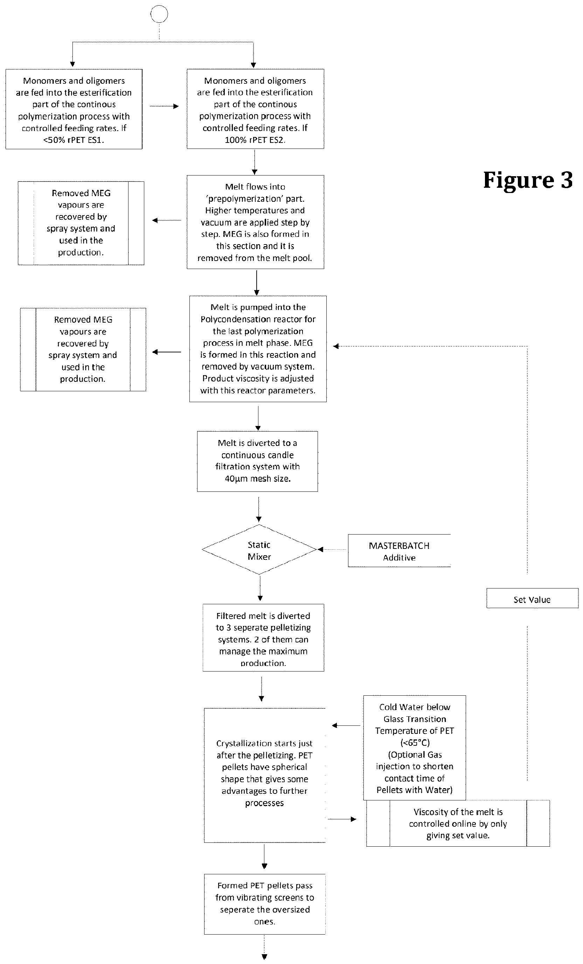

In order to produce the recycled resin (rPET), monomers and oligomers obtained in the previous step are treated with a polycondensation procedure as shown in Fig. 3 whereby the monomers and oligomers are subjected to esterification, polymerization and eventually crystallization in order to produce PET pellets. In preferred embodiments, the procedure at this stage involves a Continuous Polymerization Process (CPP) as conventionally known in the art. Said process may include usage of a finisher reactor in which the polycondensation reaction is accomplished. Mono ethylene glycol formed in this stage can be removed. The melt from the reactor is advantageously filtered with a filtration system having mesh size between 20 µm and 60 µm, and more preferably about 40 µm. The so formed resin is treated with cooling water and sent to a pelletizing system such as a granulator. The granulator preferably comprises a die plate and rotating blade for the formation of PET stripes and cutting them into small pieces of pellets.

Notably, the process equipment, particularly the die plate and the rotating blade as mentioned hereinabove undergoes a severe erosion and corrosion due to the acidic pH value of the media which is presumably caused by terephthalic acid (TPA) coming through the polycondensation procedure. Said process equipment is quite expensive and replacing them causes undesirable shut down of the process. Therefore, in attempts to solve the foregoing problems, it was surprisingly noticed by the inventors that pH value of the cooling medium formed by immersing the resin into the cooling water plays a critical role in erosion and corrosion of the process equipment, and pH of the medium is generally very low at approx. 4.4 - 5.0. Therefore, adjustment of the pH value in the cooling medium to a range between 6.5 and 7.5, more preferably to a value about 7.0 is important for the elimination of the drawbacks disclosed herein.

It was even more interesting that the temperature of the cooling water, used before palletisation, above glass transition temperature (T_{g}) of the resin (i.e. about 80°C) causes a sharp decrease in pH value to approx. 4.4 - 5.0 and deteriorates metal parts of the process equipment due to acidic environment. The inventors have unexpectedly found that adjusting temperature of the cooling water below T_{g} of the resin would ensure the desired life of die plate and blades.

Therefore, in an embodiment of the present invention, there is provided a process which involves treatment of the resin by a cooling water having a temperature below T_{g} of the resin, after the polycondensation step. Temperature of the cooling water is preferably below 70°C, more preferably between 20°C and 65°C. In the production of bottle grade resin, the temperature of the cooling water is preferably between 55°C and 65°C. Below this temperature range, the resin turns out to be opaquer and is needed to be dried faster after the crystallization, which causes increased energy consumption. The pellets obtained after the foregoing resin treatment can be collected and used later on in the production of bottle grade moulded articles such as bottles and various containers.

For producing textile grade resin, on the other hand, temperature of the cooling water below 30°C, and more preferably between 20°C and 30°C would advantageously cause increasing the amorphous resin ratio to produce textile grade products. The pellets obtained after the foregoing resin treatment can be collected and used later on in the production of textile fibres.

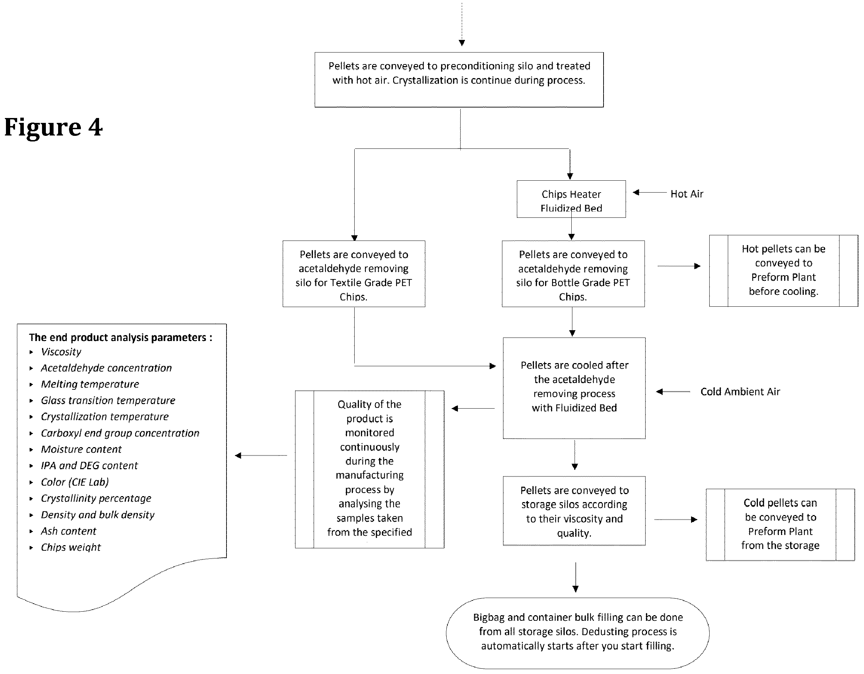

After the water-cooling procedure mentioned above, crystallization starts but is mainly accomplished in the subsequent procedure by treatment of the pellets with hot air as shown in Fig. 4, whereby acetaldehyde is removed from structure of the pellets. They are then taken into storage silos and containers, or are directly fed to a subsequent process for producing moulded articles by using the pellets made of rPET resin.

Therefore, in a further aspect of the present invention, there is provided a process for producing moulded articles, such as bottles, containers and textile grade fibres comprising moulding of rPET pellets obtained with the process disclosed above. It was surprisingly noted that such moulded articles can be produced with %100 of rPET without the need for incorporation of fresh PET resin. Said moulded articles, especially the bottles, exhibited no or minimum level of colourations and colour shades which has not been achieved before with conventional processes.

## Claims

1. A process for producing recycled PET resin or moulded articles thereof from PET wastes comprising the steps of:
a. providing PET flakes and/or fibres from the PET wastes,
b. depolymerization of the PET flakes and/or fibres by treatment with ethylene glycol and a catalyst, and obtaining monomers and oligomers,
c. polycondensation of the monomers and oligomers obtained in step (b), and obtaining a melt,
d. treating said melt with cooling water in a cooling medium, whereby pH of the cooling medium is adjusted to a value ranging from 6.5 to 7.5, and
e. obtaining the recycled PET resin.

2. A process according to claim 1 wherein the process further comprises the step of pelletisation of the recycled PET resin.

3. A process according to claim 1 wherein the temperature of the cooling water is below 70°C, wherein the cooling medium is optionally equipped with a gas injection system in which air or an inert gas is injected onto the PET resin.

4. A process according to claim 3 wherein the temperature of the cooling water is between 20°C and 65°C.

5. A process according to claim 1 wherein the catalyst is zinc acetate.

6. A process according to claim 1 wherein the process further comprises a pre-treatment procedure for washing, drying and sorting of the PET flakes and/or fibres.

7. A process according to claim 1 wherein viscosity of the monomers and oligomers in the depolymerization step (b) is adjusted to a value ranging from 0,78 dl/g to 0,05 dl/g.

8. A process according to claim 1 wherein the monomers and oligomers in the depolymerization step (b) are subjected to filtration at a value less than 5 µm.

9. A process according to claim 1 wherein the polycondensation step (c) is carried out in a continuous polymerization process.

10. A process according to claim 1 wherein the melt in the polycondensation step (c) is filtered with a filtration system having mesh size between 20 µm and 60 µm.

11. A process according to claim 1 wherein the process involves usage of a pelletizing system including a granulator with a die plate and a rotating blade.

12. A process according to claim 1 wherein the process comprises a crystallization step in which PET resin is treated with air, N₂ or CO₂.

13. A process according to claim 1 or 2 wherein the process further comprises moulding of the recycled PET resin of PET pellets to produce a moulded article, wherein 100% of PET composition of the moulded article is sourced by the recycled PET resin of PET pellets.

14. A process according to claim 13 wherein the temperature of the cooling water is between 55°C and 65°C, and said moulded article is a PET bottle or container.

15. A process according to claim 13 wherein the temperature of the cooling water is between 20°C and 30°C, and said moulded article is PET fibres.
